# EUROPEAN PATENT SPECIFICATION

(11) **EP 1 884 716 B1**
(45) Date of publication and mention of the grant of the patent: **26.03.2014**
(21) Application number: 07110916.9
(22) Date of filing: 22.06.2007
(51) Int. Cl.: F24D 13/02

(54) **Modular heating panel**
Modulares Heizpaneel
Panneau chauffant modulaire

(30) Priority: 31.07.2006 IT TO20060570
(43) Date of publication of application: 06.02.2008
(73) Proprietor: Tyco Electronics AMP Italia S.p.A., 10093 Collegno (Torino) (IT)
(72) Inventor: CHIARELLI, Davide, 10137, Torino (IT); TURCO, Giovanni, 10137, Torino (IT)
(74) Representative: Notaro, Giancarlo

(56) References cited:
- EP-A- 0 543 589
- WO-A-02/31290
- WO-A-2004/048854
- DE-U1- 20 213 020
- FR-A- 2 698 432
- FR-A1- 2 704 629
- FR-A1- 2 849 341
- US-A- 3 263 307

## Description

The present invention relates to a modular heating panel, in particular for heating floors or walls.

Modular panel for heating floors or walls are known in the art comprising a panel body, having two opposite end sides and two opposite longitudinal sides, and provided with means for quick coupling with the body of adjacent panels, and a heating layer, which can be electrically activated, applied to the lower surface of said panel body, and including at least one electrical connection terminal at each end side of the panel body.

Known heating panels are provided, on a first end side, with two male connection terminals, and, on the second end side, with two female connection terminals. During the installation phase of the panels, the electrical connection between the heating layers of two adjacent panels is achieved manually by connecting the male connection terminals of the first panel with the female connection terminals of the second panel.

Installation of the known panels is time-consuming, since the connection has to be done manually for every single panel. Furthermore, with the panels of known type the possibility exists of introducing connection errors, for example, by forgetting to connect the connection terminals of a given panel.

A modular heating panel according to the preamble of claim 1 is known from WO 2004/048854 A.

It is an object of the present invention to provide a modular heating panel of simple construction, which can be provided with easy and reliable assembling operation and able to overcome the aforesaid disadvantages.

According to the present invention, this object is achieved by a modular heating panel having the features of claim 1.

Due to the shape of the panels the mechanical connection and the electrical connection of two adjacent panels is achieved in a single operation.

The panels can be used to obtain heating floors or heating walls.

In the preferred embodiment of the invention, on the lower side of the heating layer an insulation layer is applied.

The heating layer comprises a plurality of resistance strips, transversally arranged between two support layers, which extremities are connected to each other by means of two longitudinal contact strips.

At the central portion of each end side of the panel body, there are two electrical connection terminals, each of which is connected to one of the aforesaid longitudinal contact strips.

In the panels according to the present invention, the electrical connection terminals have two different shapes on the two end sides of the panel body, suitable to provide, by means of said quick coupling means, the electrical connection between the heating layers of two adjacent panels during the connection.

The electrical connection terminals comprise a flattened body and a first bent portion, which extends from a first end of said flattened body, for the connection to one of said longitudinal contact strips of the heating layer.

The electrical connection terminals, applied on the first end side of the panel body, are provided with a second bent portion which defines a spring connection terminal.

The electrical connection terminals, applied on the second end side of the panel body, are provided with a flattened portion which defines a pad connection terminal.

In the preferred embodiment, the flattened body of the aforesaid connection terminals is positioned between the heating layer and the insulation layer. In said configuration, the first bent portions of the connection terminals are inserted in openings created between the support layers of the heating layer, and enter in contact with the aforesaid longitudinal contact strips. The connection terminals are positioned at the central portion of each end side of the panel body.

Further features and advantages of the present invention will become readily apparent from the following description with reference to the annexed drawings, given purely by way of non limiting example, in which:
- figure 1 is a top view of a heating panel according to the invention,
- figures 2A, 2B and 3 are prospective views of the connection terminals,
- figures 4-11 show the steps for manufacturing the heating layer for the panel according to the present invention,
- figures 12A and 12B are two top prospective views that show another manufacturing step of the panel,
- figures 13A and 13B are two bottom prospective views that show another manufacturing step of the panel,
- figures 14A and 15A are a top and a bottom prospective views of two adjacent panels in the unconnected condition,
- figures 14B and 15B are a top and a bottom prospective views of two adjacent panels of figures 14A and 15A in the connected condition,
- figures 16 and 17 show the connection operation of two adjacent panels,
- figures 18 and 19 are two sectional views of a first embodiment of the connection terminals, respectively in the unconnected and in the connected condition,
- figures 20 and 21 are two sectional views of a second embodiment of the connection terminals, respectively in the unconnected and in the connected condition.

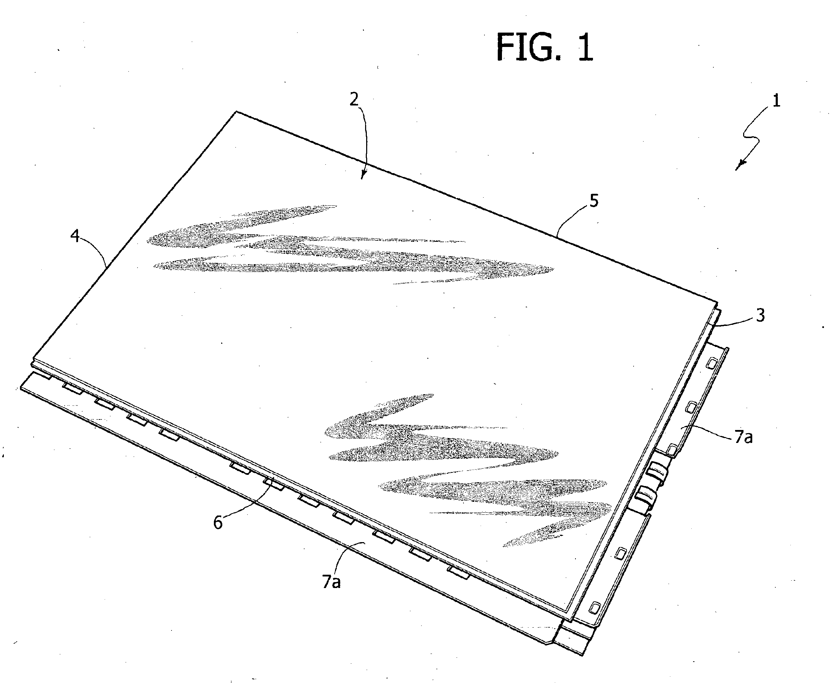

With reference to figure 1, a modular heating panel 1 comprises a panel body 2 having two opposite end sides 3 and 4 and two opposite longitudinal sides 5 and 6.

The panel body 2 is provided with means 7a for quick coupling to the body of adjacent panels, which will be described in details in the following.

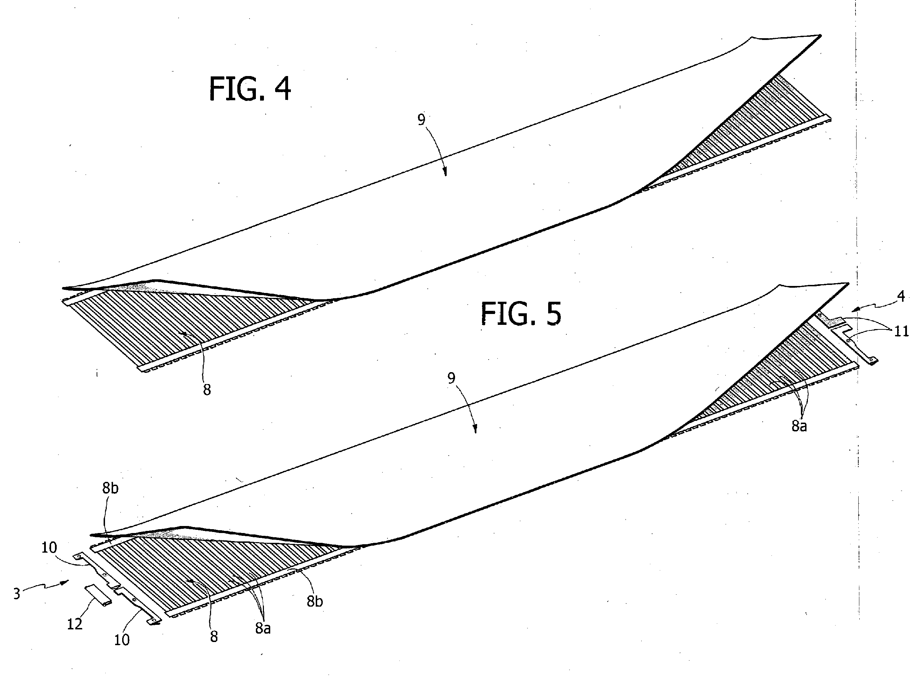

Moreover, the modular panel 1 comprises a heating layer 8, shown in figures 4 and 5, which can be electrically activated. On the lower side of the heating layer 8 an insulation layer 9 is applied.

With reference to figure 5, the heating layer 8 comprises a plurality of resistance strips 8a, transversally arranged between two support layers, not shown in the drawings. The extremities of the resistance strips 8a are connected to each other by means of two longitudinal contact strips 8b.

The heating layer 8 is applied, for instance, by means of one adhesive strip, not shown in the figures, to the lower surface of the panel body 2.

Figure 5 shows two electrical connection terminals 10 of the spring type at the first end side 3 of the panel body 2, and two electrical connection terminals 11 of the pad type at the second end side 4. Therefore, at the two end sides 3 and 4 of the panel body 2 two different shapes of the electrical connection terminals are provided to enable the electrical connection between the heating layers of two adjacent panels.

The electrical connection terminals 10 and 11 are obtained by shearing and bending operations from a metal sheet element.

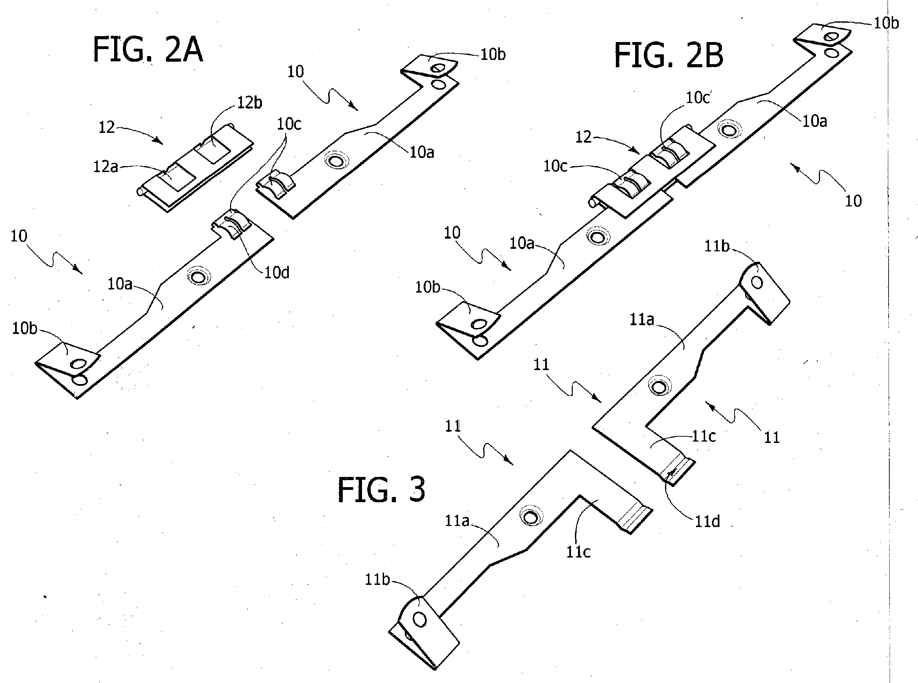

Figure 2A shows the two electrical connection terminals 10 of the spring type which are applied on the central portion of the first end side 3 of the panel body 2. Each electrical connection terminal 10 comprises a flattened body 10a, a first bent portion 10b, which extends from a first end of said flattened body 10a, for the connection to one of said longitudinal contact strips 8b of the heating layer 8, and a second bent portion 10c which extends from a second end of said flattened body 10a, defining a spring connection terminal.

The second bent portion 10c, defining the spring connection terminal, is provided with a curved portion 10d.

In the example shown, the curved portion 10d comprises two separated tabs.

Figure 2A also shows a housing element 12 for containing the spring connection terminals 10 and holding them in position in order to avoid a contact therebetween. The aforesaid housing element 12 is made of insulating material and comprises two windows 12a and 12b for receiving the aforesaid second bent portions 10c defining the spring connection terminals.

Figure 2B shows the two spring connection terminals 10 inserted in the housing element 12.

Figure 3 shows the two electrical connection terminals 11 of the pad type which are applied on the central portion of the second end side 4 of the panel body 2. In particular, the connection terminals 11 comprise a flattened body 11a, a first bent portion 11b, which extends from a first end of said flattened body 11a, for the connection to one of said longitudinal contact strips 8b of the heating layer 8, and a flattened portion 11c which extends from a second end of said flattened body 11a, defining a pad connection terminal.

In the example shown, the flattened portion 11c is provided with a curved portion 11d.

Thanks to their shape, the electrical connection terminals 10 and 11, can be connected to the aforesaid longitudinal contact strips 8b of the heating layer 8.

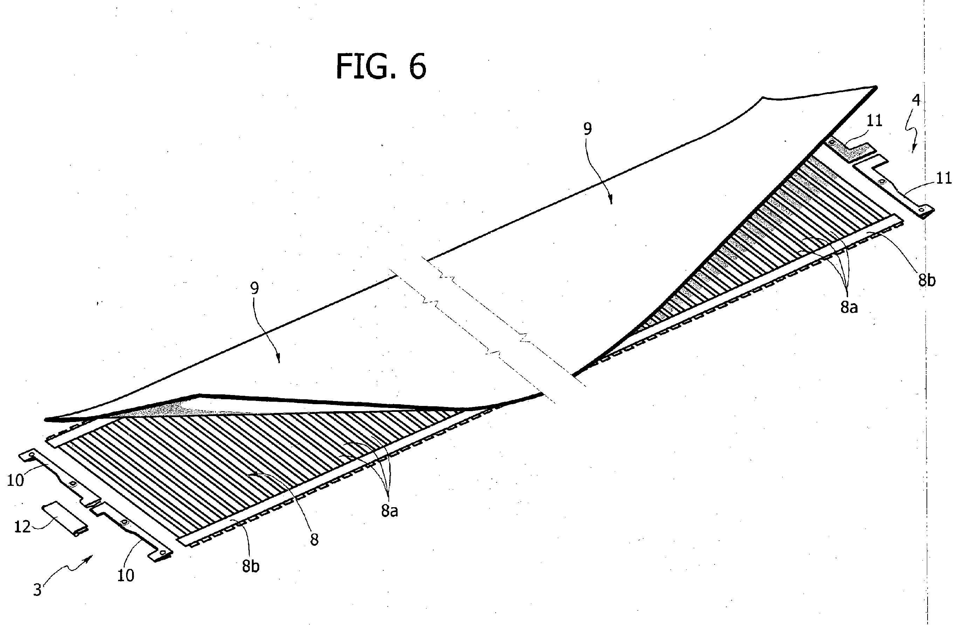

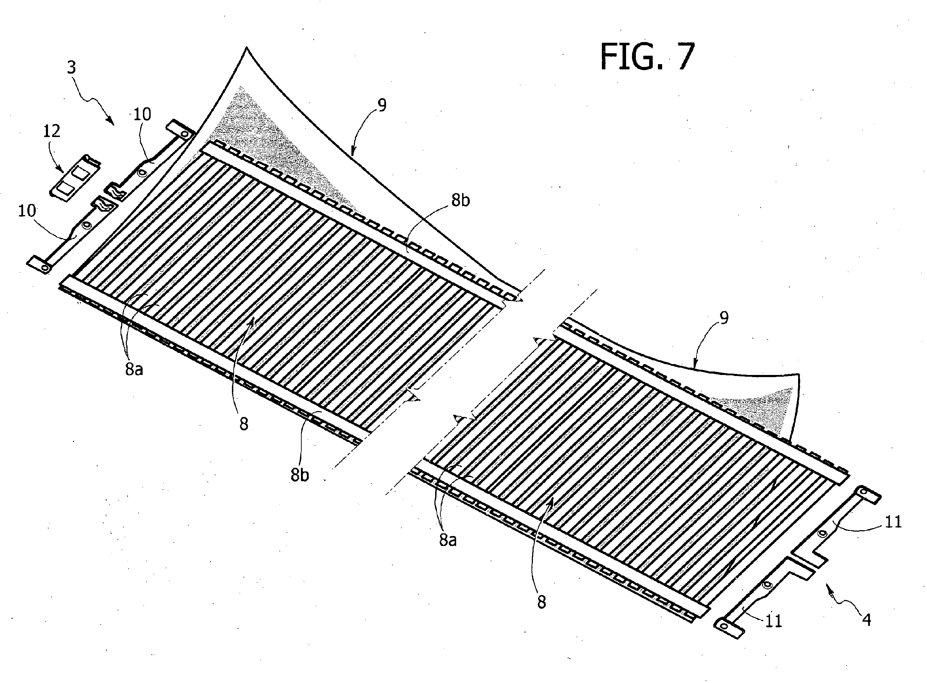

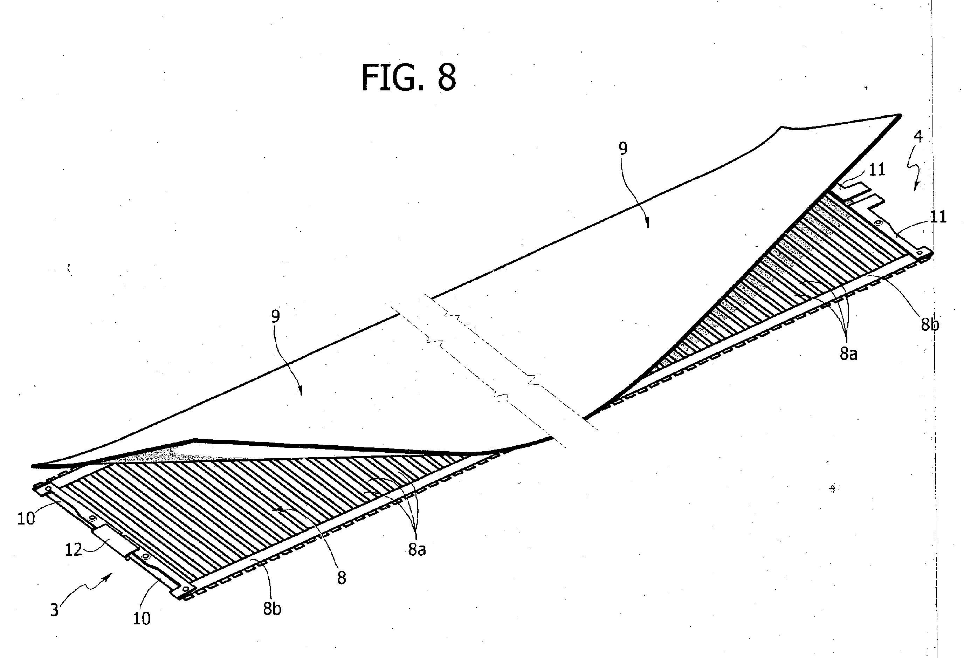

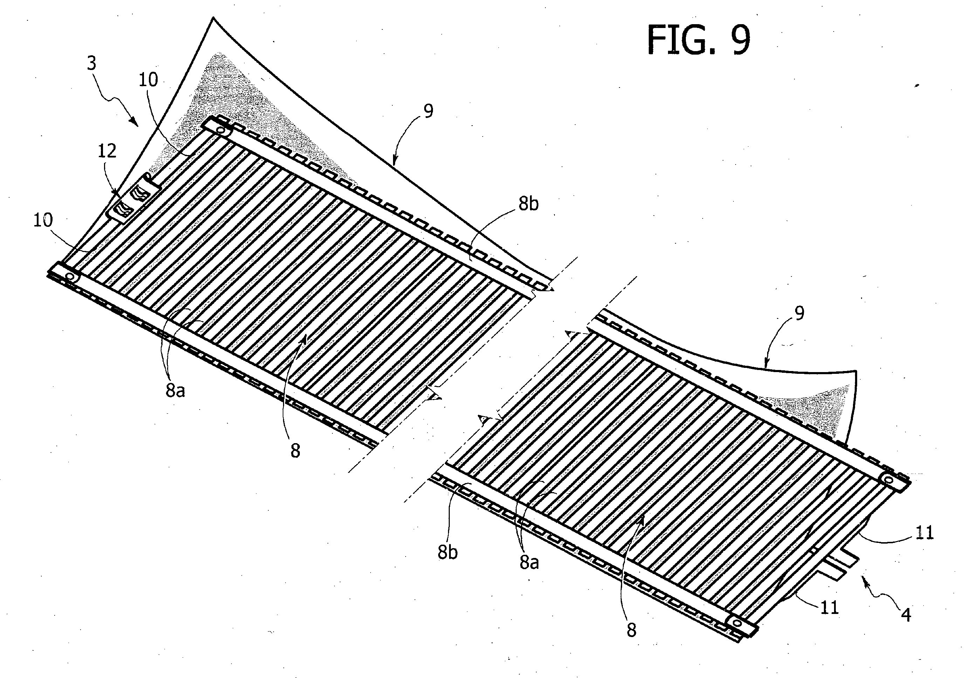

Figures 6, 7, 8, and 9 show different steps of the production of the aforesaid heating panel. In particular, figures 6 and 7 show the installation operations of the connection terminals 10 and 11 on the heating layer 8, respectively viewed from above and from below.

The flattened body 10a and 11a of the aforesaid connection terminals 10 and 11 is positioned between the heating layer 8 and the insulation layer 9. The first bent portions 10b and 11b of the respective connection terminals 10 and 11 enter in contact with the aforesaid longitudinal contact strips 8b of the heating layer 8 each of which is inserted in an opening (not shown in the drawings) created between the support layers of the heating layer 8. Due to their shape, the connection terminals 10c and 11c are positioned at the central portion of each end side 3 and 4 of the panel body 2.

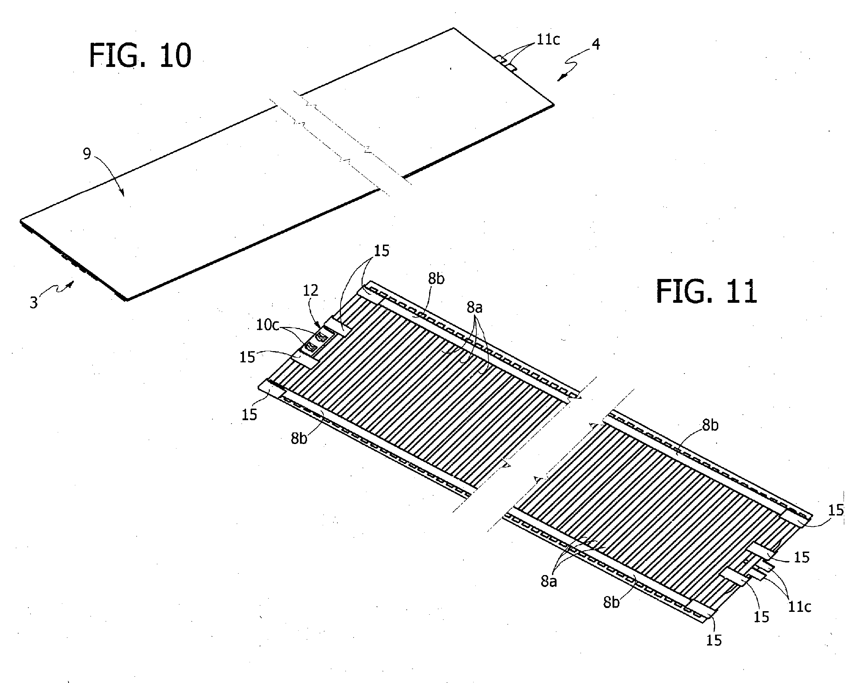

Figures 10 and 11 show the heating layer 8, covered by the insulation layer 9, after the operation of installation of the contacts 10 and 11 is completed.

Preferably the contact terminals 10 and 11 are fixed to the heating layer 8 by means of a riveting operation followed by the application of insulating tape strips 15.

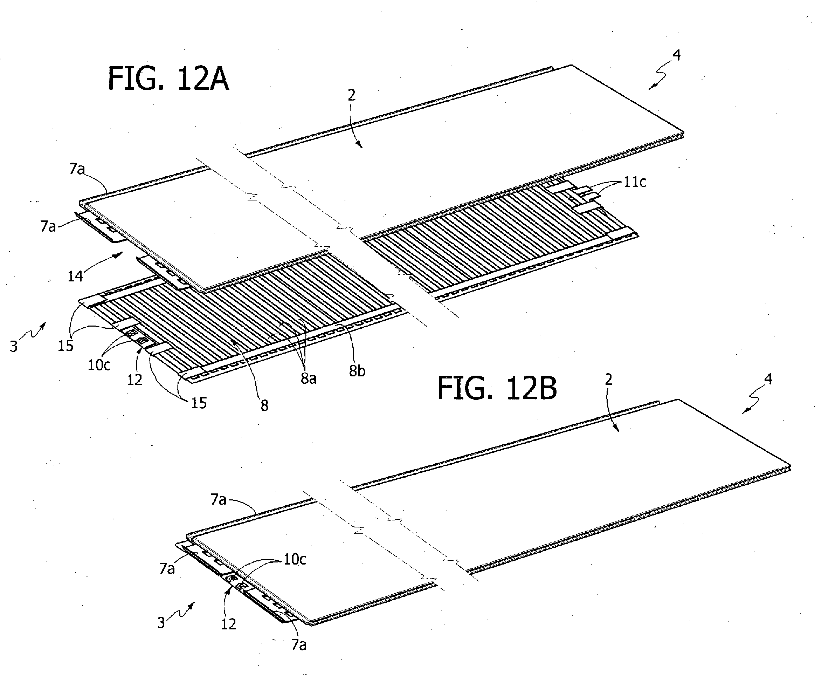

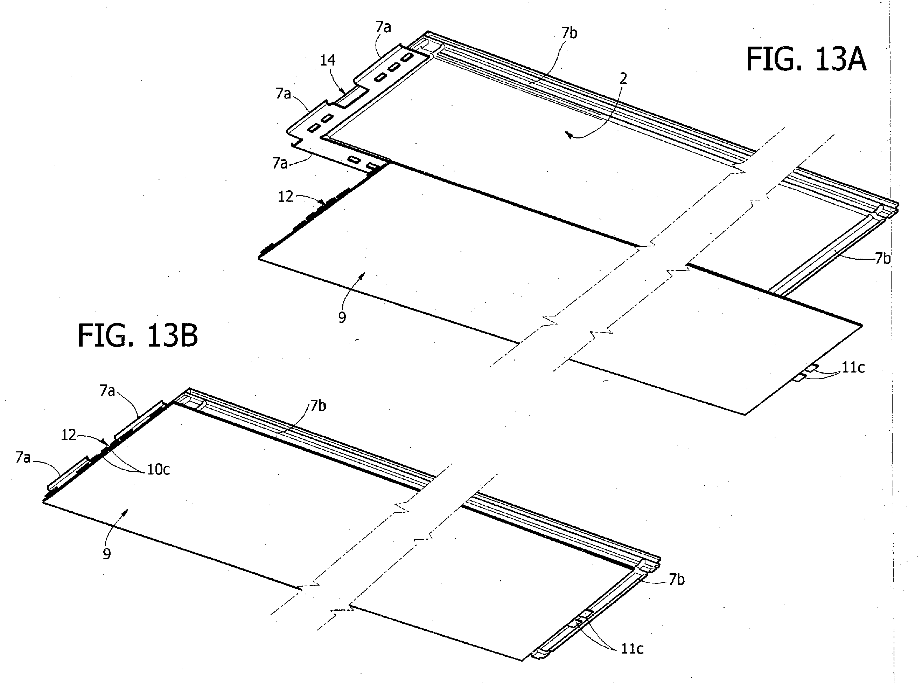

At this point, the unit comprising the heating layer 8 and the insulation layer 9 is connected to the panel body 2 as shown in figures 12A, 12B, 13A and 13B.

In particular, figures 12A and 12B are top views, while figures 13A and 13B are bottom views.

With reference to figure 13A the quick coupling means 7 comprise an L-shaped metal sheet flattened element 7a, connected to the lower surface of the panel body 2, along the first end side 3 and the first longitudinal side 6 of the panel.

The quick coupling means 7 also comprise a groove 7b, in the peripheral portion of the lower surface of the panel body 2, along the first end side 4 and the second longitudinal side 5.

Said groove 7b is adapted to be coupled with the respective metal sheet flattened element 7a of the adjacent panels.

The flattened element 7a is provided, at the central portion of the first end side 3, with a window 14 for receiving and holding said housing element 12 containing the spring connection terminals 10c.

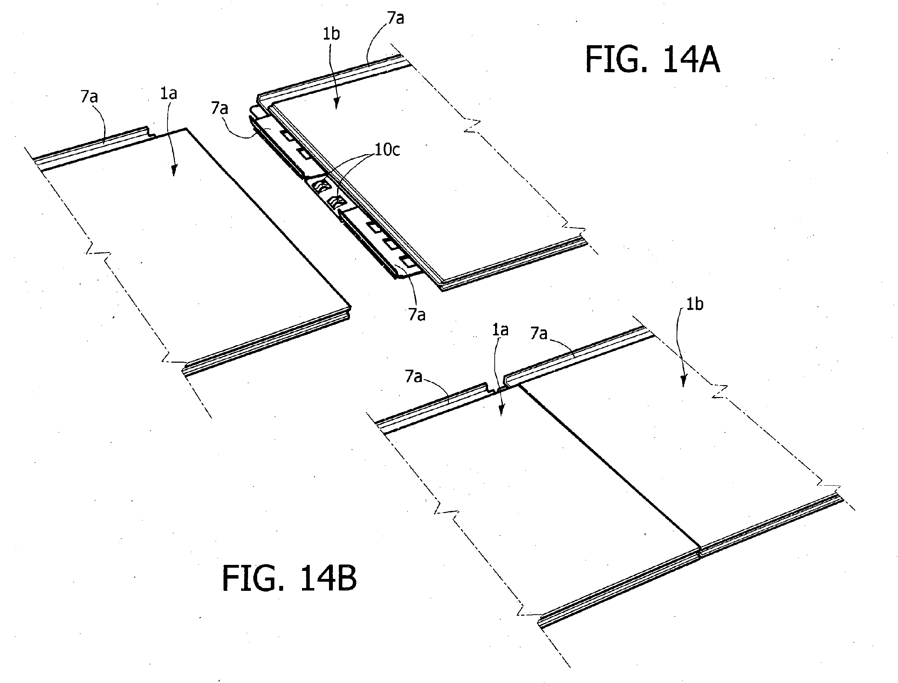

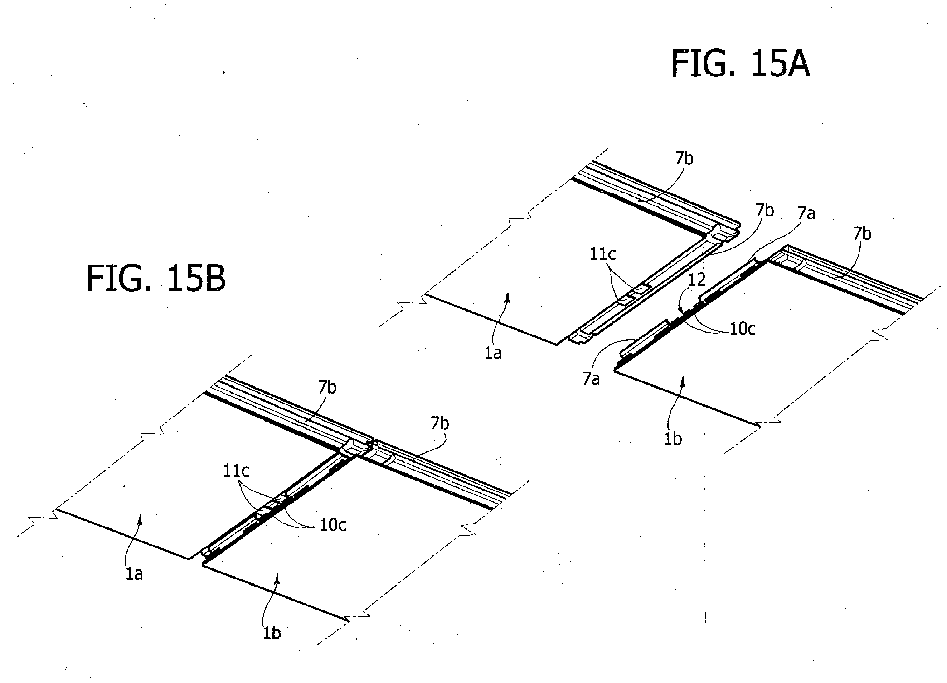

Figures 14A and 15A show the unconnected condition of two panels 1a and 1b.

Figures 14B and 15B show the same panels 1a and 1b in their connected condition.

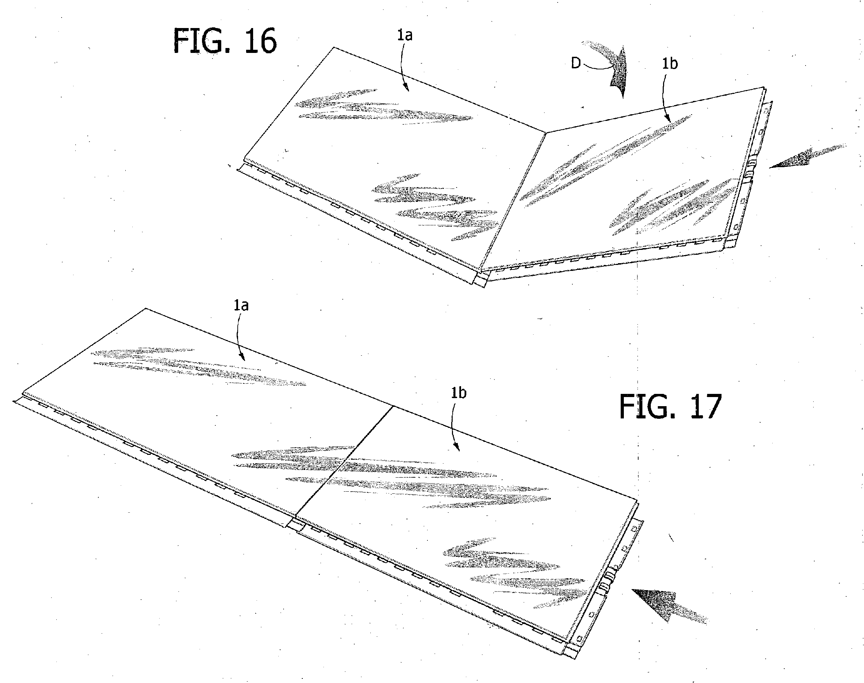

In particular, due to the configuration of the quick coupling means 7a and 7b, the connection of two adjacent panels occurs as shown in figures 16 and 17.

Starting from an installed panel 1a, a second panel 1b is installed. The panel 1b is drawn close, according to a certain angle, to the panel 1a. When the quick coupling means 7a of the panel 1a enter in contact with the groove 7b of the panel 1b it is required to rotate the panel 1b towards the support plane according to the direction D.

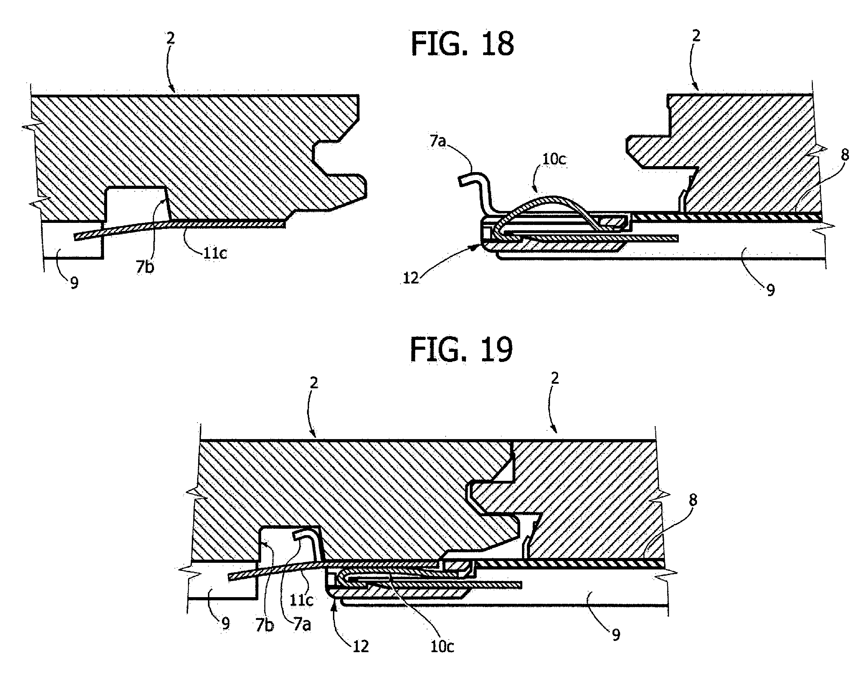

The sections of figures 18 and 19 show two panels, respectively in the unconnected condition and in the connected condition.

In a first embodiment, the spring connection terminal 10c has a bent portion 10d suitable to ensuring a better electric connection. In this embodiment, the pad connection terminal 11c has a flattened shape.

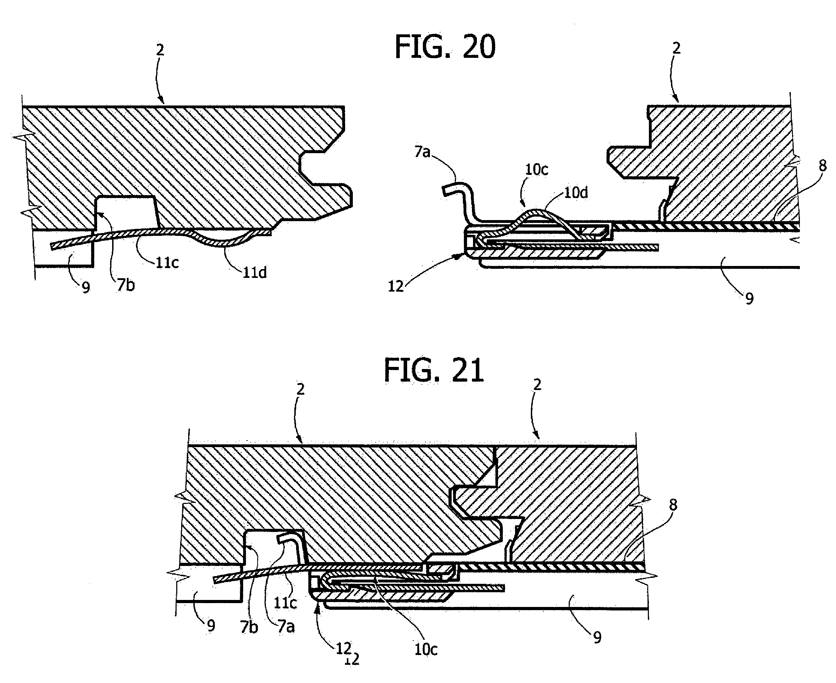

Figures 20 and 21 show a second embodiment of the connection terminals 10c and 11c. In particular, the pad connection terminal 11c has a curved portion 11d suitable for ensuring a better electric connection and a greater elasticity of the contact.

The connection terminal 10c has a curved portion 10d followed by a flattened portion 10e whose shape is suitable for ensuring a better support of the spring contact 10c on the insulation layer.

The electric connection terminals 10 and 11 are shaped and positioned, with respect to the panel body 2, so that the electrical connection between two adjacent panels is obtained as a result, and at the same time, of the coupling between said adjacent panels through said quick coupling means 7a and 7b.

As clearly apparent from the foregoing description, the heating panel according to the present invention produces advantages both from the point of view of the simplicity of manufacture, especially with regard to the contacts, that can be obtained by shearing and bending operations from a metal sheet element, and from the point of view of the simplicity of use and the reliability of the electrical connection between adjacent panels.

Naturally, while the principle of the invention remains the same, the details of construction and the embodiments may widely vary with respect to what has been described and shown purely by way of example, without departing from the scope of the present invention.

## Claims

1. Modular heating panel comprising:
- a panel body (2), having two opposite end sides (3, 4) and two opposite longitudinal sides (5, 6), and provided with means (7a, 7b) for quick coupling with the body of adjacent panels (1a, 1b),
- wherein said quick coupling means (7a, 7b) are such that a panel (1b to be installed can be coupled to an already installed panel (1a) by being drawn close, according to a certain angle, to the already installed panel (1a) and then by being rotated towards the support plane , and
- a heating layer (8), which can be electrically activated, applied to the lower surface of said panel body (2), and including at least one electrical connection terminal (10, 11) at each end side (3,4) of the panel body (2),
- wherein said heating layer (8) comprises a plurality of resistance strips (8a), transversally arranged between two support layers, whose extremities are connected to each other by means of two longitudinal contact strips (8b),
- wherein at each end side (3, 4) of the panel body there are two electrical connection terminals (10, 11), each of which is connected to one of the aforesaid longitudinal contact strips (8b),
- wherein said electrical connection terminals (10, 11) at the two end sides (3, 4) of the panel body (2) are shaped and positioned with respect to the panel body (2), so that the electrical connection between two adjacent panels (1a, 1b) is obtained as a result, and at the same time of the coupling between said panels (1a,1b through said quick coupling means (7a, 7b),
**characterized in that** said electrical connection terminals (10, 11) are located at the central portion of each end side (3, 4) of the panel body,
**in that** the two electrical connection terminals (10) at the first end side (3) of the panel body (2) are of the spring type defining a spring connection terminal, and the two electrical connection terminals (11) at the second end side (4) of the panel body (2) are of the pad type defining a pad connection terminal.

2. Modular heating panel according to claim 1, **characterized in that** it further comprises an insulation layer (9), applied on the lower side of the heating layer (8).

3. Modular heating panel according to claim 3, **characterized in that** said electrical connection terminals (10,11) are obtained by shearing and bending operations from a metal sheet element.

4. Modular heating panel according to claim 1, **characterized in that** the spring connection terminal comprises:
- a flattened body (10a),
- a first bent portion (10b), which extends from a first end of said flattened body (10a), for the connection to one of said longitudinal contact strips (8a) of the heating layer (8), and
- a second bent portion (10c), which extends from a second end of said flattened body (10a).

5. Modular heating panel according to claim 4, **characterized in that** said second bent portion (10c) is provided with an curved portion (10d).

6. Modular heating panel according to claim 5, **characterized in that** said curved portion (10d) comprises a plurality of separated tabs.

7. Modular heating panel according any of the previous claims 4 to 6, **characterized in that** at the central portion of said first end side (3) of the panel body (2) a housing element (12) is provided for holding the spring connecting terminals (10) on the heating layer (8), said housing element (12) being made of insulating material, and comprising two windows (14a, 14b) for receiving the aforesaid second bent portions (10c) defining the spring connection terminals.

8. Modular heating panel according to claim 1, **characterized in that** the pad connection terminal comprises:
- a flattened body (11a),
- a first bent portion (11b), which extends from a first end of said flattened body (11a), for the connection to one of said longitudinal contact strips (8a) of the heating layer (8), and
- a flattened portion (11c), which extends from a second end of said flattened body (11a).

9. Modular heating panel according to claim 8, **characterized in that** said flattened portion (11c) is provided with a curved portion (11d).

10. Modular heating panel according to claim 4 and claim 8, **characterized in that**:
- the flattened body (10a, 11a) of the aforesaid connection terminals (10, 11) is positioned between the heating layer (8) and the insulation layer (9), and **in that**
- the first bent portions (10b, 11b) of the connection terminals enter in contact with the aforesaid longitudinal contact strips (8b).

11. Modular heating panel according to claim 10, **characterized in that** the first bent portions (10b, 11b) are received in an opening created between the support layers of the heating layer (8).

12. Modular heating panel according to any of the previous claims, **characterized in that** said means (7) for quick coupling with the body of adjacent panels (1a, 1b) comprise:
- an L-shaped metal sheet flattened element (7a), connected to the lower surface of said panel body (2) along a first end side (3) and along a first longitudinal side (6), and
- a groove (7b), at the peripheral portion of the lower surface of said panel body (2), along a second end side (4) and along a second longitudinal side (5), in which said groove (7b) is adapted to be coupled with metal sheet flattened elements (7a) of adjacent panels (1a, 1b).

13. Modular heating panel according to claim 9 and claim 12, **characterized in that** said metal sheet flattened element (7a) is provided, on the central portion of said first end side (3) of the panel body (2), with a window (14) suitable for receiving said housing element (12) of insulating material containing said spring connection terminals (10c).

## Patentansprüche

1. Modulares Heizpaneel, das Folgendes umfasst:
einen Paneelkörper (2), der zwei gegenüberliegende Stirnseiten (3, 4) und zwei gegenüberliegende Längsseiten (5, 6) hat und mit Mitteln (7a, 7b) zum schnellen Koppeln mit dem Körper von benachbarten Paneelen (1a, 1b) versehen ist,
wobei die Schnellkopplungsmittel (7a, 7b) derart sind, dass ein zu installierendes Paneel (1b) an ein bereits installiertes Paneel (1a) gekoppelt werden kann dadurch, dass es, entsprechend einem bestimmten Winkel, an das bereits installierte Paneel (1a) gezogen wird, und dann dadurch, dass es zu der Stützebene hin gedreht wird, und
eine Heizlage (8) die elektrisch aktiviert werden kann, die auf die untere Fläche des Paneelkörpers (2) aufgebracht ist und die wenigstens einen elektrischen Verbindungsanschluss (10, 11) an jeder Stirnseite (3, 4) des Paneelkörpers (2) einschließt,
wobei die Heizlage (8) mehrere Widerstandsstreifen (8a) umfasst, die quer zwischen zwei Stützlagen angeordnet sind, deren Enden mit Hilfe von zwei längs verlaufenden Kontaktstreifen (8b) miteinander verbunden sind,
wobei es an jeder Stirnseite (3, 4) des Paneelkörpers zwei elektrische Verbindungsanschlüsse (10, 11) gibt, deren jeder mit einem der zuvor erwähnten längs verlaufenden Kontaktstreifen (8b) verbunden ist,
wobei die zwei elektrischen Verbindungsanschlüsse (10, 11) an den zwei Stirnseiten (3, 4) des Paneelkörpers (2) in Bezug auf den Paneelkörper (2) so geformt und angeordnet sind, dass die elektrische Verbindung zwischen zwei benachbarten Paneelen (1a, 1b) im Ergebnis und zur gleichen Zeit der Kopplung zwischen den Paneelen (1a, 1b) durch die Schnellkopplungsmittel (7a, 7b) erreicht wird,
**dadurch gekennzeichnet, dass** die elektrischen Verbindungsanschlüsse (10, 11) an dem mittleren Abschnitt jeder Stirnseite (3, 4) des Paneelkörpers angeordnet sind,
und dadurch, dass die zwei elektrischen Verbindungsanschlüsse (10) an der ersten Stirnseite (3) des Paneelkörpers (2) vom Federtyp sind, wobei sie einen Feder-Verbindungsanschluss definieren, und die zwei elektrischen Verbindungsanschlüsse (11) an der zweiten Stirnseite (4) des Paneelkörpers (2) vom Kontaktstellentyp sind, wobei sie einen Kontaktstellen-Verbindungsanschluss definieren.

2. Modulares Heizpaneel nach Anspruch 1, **dadurch gekennzeichnet, dass** es ferner eine Isolationslage (9) umfasst, die auf der unteren Seite der Heizlage (8) aufgebracht ist.

3. Modulares Heizpaneel nach Anspruch 2, **dadurch gekennzeichnet, dass** die elektrischen Verbindungsanschlüsse (10, 11) durch Scher- und Biegevorgänge aus einem Metallblechelement gewonnen werden.

4. Modulares Heizpaneel nach Anspruch 1, **dadurch gekennzeichnet, dass** der Feder-Verbindungsanschluss Folgendes umfasst:
einen abgeflachten Körper (10a),
einen ersten gebogenen Abschnitt (10b), der sich von einem ersten Ende des abgeflachten Körpers (10a) aus erstreckt, für die Verbindung mit einem von den längs verlaufenden Kontaktstreifen (8a) der Heizlage (8), und
einen zweiten gebogenen Abschnitt (10c), der sich von einem zweiten Ende des abgeflachten Körpers (10a) aus erstreckt.

5. Modulares Heizpaneel nach Anspruch 4, **dadurch gekennzeichnet, dass** der zweite gebogene Abschnitt (10c) mit einem gekrümmten Abschnitt (10d) versehen ist.

6. Modulares Heizpaneel nach Anspruch 5, **dadurch gekennzeichnet, dass** der gekrümmte Abschnitt (10d) mehrere gesonderte Laschen umfasst.

7. Modulares Heizpaneel nach einem der vorhergehenden Ansprüche 4 bis 6, **dadurch gekennzeichnet, dass** an dem mittleren Abschnitt der ersten Stirnseite (3) des Paneelkörpers (2) ein Gehäuseelement (12) bereitgestellt wird, um die Feder-Verbindungsanschlüsse (10) auf der Heizlage (8) zu halten, wobei das Gehäuseelement (12) aus einem isolierenden Werkstoff hergestellt ist und zwei Fenster (14a, 14b) umfasst, um die zuvor erwähnten zweiten gebogenen Abschnitte (10c) aufzunehmen, welche die Feder-Verbindungsanschlüsse definieren.

8. Modulares Heizpaneel nach Anspruch 1, **dadurch gekennzeichnet, dass** der Kontaktstellen-Verbindungsanschluss Folgendes umfasst:
einen abgeflachten Körper (11a),
einen ersten gebogenen Abschnitt (11b), der sich von einem ersten Ende des abgeflachten Körpers (11a) aus erstreckt, für die Verbindung mit einem von den längs verlaufenden Kontaktstreifen (8a) der Heizlage (8), und
einen abgeflachten Abschnitt (11c), der sich von einem zweiten Ende des abgeflachten Körpers (11a) aus erstreckt.

9. Modulares Heizpaneel nach Anspruch 8, **dadurch gekennzeichnet, dass** der abgeflachte Abschnitt (11c) mit einem gekrümmten Abschnitt (11d) versehen ist.

10. Modulares Heizpaneel nach Anspruch 4 und Anspruch 8, **dadurch gekennzeichnet, dass**
der abgeflachte Körper (10a, 11a) der zuvor erwähnten Verbindungsanschlüsse (10, 11) zwischen der Heizlage (8) und der Isolationslage (9) angeordnet sind, und dadurch, dass
die ersten gebogenen Abschnitte (10b, 11b) der Verbindungsanschlüsse in Kontakt mit den zuvor erwähnten längs verlaufenden Kontaktstreifen (8b) treten.

11. Modulares Heizpaneel nach Anspruch 10, **dadurch gekennzeichnet, dass** die ersten gebogenen Abschnitte (10b, 11b) in einer zwischen den Stützlagen der Heizlage (8) geschaffenen Öffnung aufgenommen werden.

12. Modulares Heizpaneel nach einem der vorhergehenden Ansprüche, **dadurch gekennzeichnet, dass** die Mittel (7) zum schnellen Koppeln mit dem Körper von benachbarten Paneelen (1a, 1b) Folgendes umfassen:
ein L-förmiges abgeflachtes Metallblechelement (7a), das entlang einer ersten Stirnseite (3) und entlang einer ersten Längsseite (6) mit der unteren Fläche des Paneelkörpers (2) verbunden ist, und
eine Rille (7b), an dem Umfangsabschnitt der unteren Fläche des Paneelkörpers (2), entlang einer zweiten Stirnseite (4) und entlang einer zweiten Längsseite (5), wobei die Rille (7b) dafür eingerichtet ist, mit den abgeflachten Metallblechelementen (7a) von benachbarten Paneelen (1a, 1b) gekoppelt zu werden.

13. Modulares Heizpaneel nach Anspruch 9 und Anspruch 12, **dadurch gekennzeichnet, dass** das abgeflachte Metallblechelement (7a), an dem mittleren Abschnitt der ersten Stirnseite (3) des Paneelkörpers (2), mit einem Fenster (14) versehen ist, das dafür geeignet ist, das Gehäuseelement (12) aus einem isolierendem Werkstoff aufzunehmen, das die Feder-Verbindungsanschlüsse (10c) enthält.

## Revendications

1. Panneau chauffant modulaire, comprenant :
un corps de panneau (2), comportant deux côtés d'extrémité opposés (3, 4) et deux côtés longitudinaux opposés (5, 6), et comportant des moyens (7A, 7b) pour assurer un accouplement rapide au corps de panneaux adjacents (1a, 1b) ;
dans lequel lesdits moyens de raccordement rapide (7a, 7b) sont tels qu'un panneau (1b) devant être installé peut être accouplée à un panneau déjà installé (1a) en étant entraîné près du panneau déjà installé (1a), en fonction d'un angle défini, et en étant ensuite tourné vers le plan de support ; et
une couche chauffante (8), pouvant être activée électriquement, appliquée sur la surface inférieure dudit corps du panneau (2), et englobant au moins une borne de connexion électrique (10, 11) au niveau de chaque côté d'extrémité (3, 4) du corps du panneau (2) ;
dans lequel ladite couche chauffante (8) comprend plusieurs bandes de résistance (8a), agencées transversalement entre deux couches de support, dont les extrémités sont connectées les unes aux autres par l'intermédiaire de deux bandes de contact longitudinales (8b) ;
dans lequel, au niveau de chaque côté d'extrémité (3, 4) du corps du panneau sont agencées deux bornes de connexion électrique (10, 11), dont chacune est connectée à l'une des bandes de contact longitudinales ci-dessus (8b) ;
dans lequel lesdites bornes de connexion électrique (10, 11) au niveau des deux côtés d'extrémité (3, 4) du corps du panneau (2) sont formées et positionnées par rapport au corps du panneau (2) de sorte à entraîner l'établissement de la connexion électrique entre deux panneaux adjacents (1a, 1b), de manière simultanée à l'accouplement entre lesdits panneaux (1a, 1b) par l'intermédiaire desdits moyens de d'accouplement rapide (7a, 7b) ;
**caractérisé en ce que** lesdites bornes de connexion électrique (10, 11) sont agencées au niveau de la partie centrale de chaque côté d'extrémité (3, 4) du corps du panneau ;
**en ce que** les deux bornes de connexion électriques (10) au niveau du premier côté d'extrémité (3) du corps du panneau (2) sont du type ressort, définissant une borne de connexion à ressort, les deux bornes de connexion électrique (11) au niveau du deuxième côté d'extrémité (4) du corps du panneau (2) étant du type à plot, définissant une borne de connexion à plot.

2. Panneau chauffant modulaire selon la revendication 1, **caractérisé en ce qu'**il comprend en outre une couche isolante (9), appliquée sur le côté inférieur de la couche chauffante (8).

3. Panneau chauffant modulaire selon la revendication 2, **caractérisé en ce que** lesdites bornes de connexion électrique (10, 11) sont établies par des opérations de cisaillement et de flexion à partir d'un élément de feuille métallique.

4. Panneau chauffant modulaire selon la revendication 1, **caractérisé en ce que** la borne de connexion à ressort comprend :
un corps aplati (10a) ;
une première partie fléchie (10b), s'étendant à partir d'une première extrémité dudit corps aplati (10a), en vue de la connexion à l'une desdites bandes de contact longitudinales (8a) de la couche chauffante (8) ; et
une deuxième partie fléchie (10c), s'étendant à partir d'une deuxième extrémité dudit corps aplati (10a).

5. Panneau chauffant modulaire selon la revendication 4, **caractérisé en ce que** ladite deuxième partie fléchie (10c) comporte une partie courbée (10d).

6. Panneau chauffant modulaire selon la revendication 5, **caractérisé en ce que** ladite partie courbée (10d) comprend plusieurs pattes séparées.

7. Panneau chauffant modulaire selon l'une quelconque des revendications 4 à 6, **caractérisé en ce qu'**au niveau de la partie centrale dudit premier côté d'extrémité (3) du corps du panneau (2) est agencé un élément de boîtier (12) pour retenir les bornes de connexion à ressort (10) sur la couche chauffante (8), ledit élément de boîtier (12) étant composé d'un matériau isolant et comprenant deux fenêtres (14a, 14b) pour recevoir lesdites deuxièmes parties fléchies (10e) définissant les bornes de connexion à ressort.

8. Panneau chauffant modulaire selon la revendication 1, **caractérisé en ce que** la borne de connexion à plot comprend :
un corps aplati (11a) ;
une première partie fléchie (11b), s'étendant à partir de la première extrémité dudit corps aplati (11a) en vue d'une connexion à l'une desdits bandes de contact longitudinales (8a) de la couche chauffante (8) ; et
une partie aplatie (11c), s'étendant à partir d'une deuxième extrémité dudit corps aplati (11a).

9. Panneau chauffant modulaire selon la revendication 8, **caractérisé en ce que** ladite partie aplatie (11c) comporte une partie courbée (11d).

10. Panneau chauffant modulaire selon les revendications 4 et 8, **caractérisé en ce que** :
le corps aplati (10a, 11a) desdites bornes de connexion (10, 11) est positionné entre la couche chauffante (8) et la couche isolante (9) ; et **en ce que**
les premières parties fléchies (10b, 11b) des bornes de connexion entrent en contact avec lesdites bandes de contact longitudinales (8b).

11. Panneau chauffant modulaire selon la revendication 10, **caractérisé en ce que** les premières parties fléchies (10b, 11b) sont reçues dans une ouverture formée entre les couches de support de la couche chauffante (8).

12. Panneau chauffant modulaire selon l'une quelconque des revendications précédentes, **caractérisé en ce que** lesdits moyens (7) d'accouplement rapide au corps de panneaux adjacents (1a, 1b) comprennent :
un élément aplati de feuille métallique en forme de L (7a), connecté à la surface inférieure dudit corps du panneau (2), le long d'un premier côté d'extrémité (3) et le long d'un premier côté longitudinal (6) ; et
une rainure (7b), au niveau de la partie périphérique de la surface inférieure dudit corps du panneau (2), le long d'un deuxième côté d'extrémité (4) et le long d'un deuxième côté longitudinal (5), ladite rainure (7b) étant adaptée pour être accouplée à des éléments aplatis de feuille métallique (7a) de panneaux adjacents (1a, 1b).

13. Panneau chauffant modulaire selon les revendications 9 et 12, **caractérisé en ce que** ledit élément aplati de feuille métallique (7a) comporte, sur la partie centrale duit premier côté d'extrémité (3) du corps du panneau (2), une fenêtre (14), appropriée pour recevoir ledit élément de boîtier (12) de matériau isolant contenant lesdites bornes de connexion à ressort (10c).
